# EUROPEAN PATENT APPLICATION

(11) **EP 0 909 893 A2**
(43) Date of publication of application: **21.04.1999**
(21) Application number: 98119321.2
(22) Date of filing: 13.10.1998
(51) Int. Cl.: F02M 61/18

(54) **Direct injection diesel engine**

(30) Priority: 14.10.1997 JP 280876/97
(71) Applicant: NISSAN MOTOR COMPANY, LIMITED, Yokohama-shi, Kanagawa 221-0023 (JP)
(72) Inventor: Shiraki, Masahito, Yokohama-shi, Kanagawa 221-0001 (JP)
(74) Representative: Grünecker, Kinkeldey, Stockmair & Schwanhäusser Anwaltssozietät

(57) **Abstract**

A direct injection diesel engine comprises a cylinder block having a cylinder, a piston with a cavity in a piston crown, a cylinder head on the cylinder block and having a combustion-chamber ceiling wall cooperating with the piston crown and the cavity to define a combustion chamber, and a fuel injector nozzle attached to the ceiling wall of the cylinder head for injecting fuel toward the cavity. The fuel injection angle of the injector nozzle is set such that the center axis of the fuel spray, injected from the injector nozzle at the injection termination timing under an engine operating condition where the injection termination timing is most largely delayed, intersects a portion nearer the edged portion bordered between the cavity and the piston crown.

## Description

### BACKGROUND OF THE INVENTION

### Field of the Invention

The present invention relates to an in-cylinder direct injection diesel engine employing a fuel-injection system that injects fuel directly into the combustion chamber, and specifically to a direct injection diesel engine with a fuel-injection system having a multi-hole type injector nozzle in which fuel is injected or sprayed out radially in a substantially conical spray by way of each of a number of spray holes bored or drilled in the tip, and more specifically to techniques for setting a so-called fuel injection angle which is defined, for example, as an angle between the central axes of two fuel sprays diametrically opposed to each other and lying in the plane through the center axis of the injector nozzle.

### Description of the Prior Art

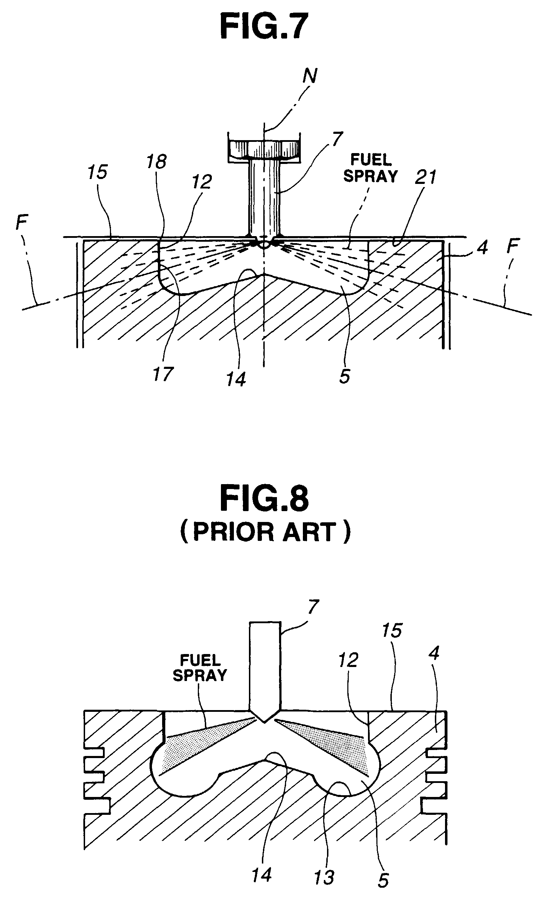

In recent years, there have been proposed and developed various diesel-engine fuel-injection and exhaust-emission control techniques which help to reduce air pollutants from the automobiles and enhance engine power output. Typical forms of combustion chamber suitable for direct injection diesel engines are shown in Fig. 8 or disclosed in Japanese Patent Provisional Publication No. 63-162925. Referring now to Fig. 8, there is shown one example of a typical open combustion chamber for direct injection diesel engines. As seen in Fig. 8, a piston 4 for use in diesel engines is formed with a reentrant cavity 5 in the piston crown or head 15. The piston 4 shown in Fig. 8 is generally termed as an "open combustion chamber type pistons". The cavity 5 of the open chamber type piston 4 is defined by an essentially cylindrical inlet portion 12 which opens upward at the top surface 15 of the piston, a reentrant portion 13 further recessed from the cylindrical inlet portion 12, and a central raised portion 14 slightly raised upwardly from the bottom of the reentrant portion 13 of the open combustion chamber. The injector nozzle 7 is located so that the center axis of the nozzle is coaxial with the center axis of the associated engine cylinder, and that the tip of the nozzle 7 is directed to the centre of the cavity 5 of the open combustion chamber. The nozzle 7 has a plurality of fine spray holes in its tip. The fuel is injected or directed into the reentrant portion 13 of the cavity 5 radially via the spraying holes. That is, a finely atomized jet of fuel injected from the respective spray hole is directed into the reentrant portion 13 in the form of a substantially conical spray. Most of the conical fuel jet or fuel spray is concentrated in the cavity 5. This lowers the formation of unburned fuel or hydrocarbons (HC) and thus reduces emissions of smoke and particulates. However, in a conventional direct injection diesel engine employing a typical open combustion chamber type piston, during high engine loads where a large amount of fuel is required, the fuel spray output from each spray hole would be concentrated in the cavity 5. Thus, the fuel sprayed out cannot utilize the whole of the air prevailing in the combustion chamber, because of the fuel spray concentrated in the cavity 5. In other words, there is a reduced tendency of the air utilization factor owing to the fuel spray concentrated in the cavity 5 during the high engine load. As set forth above, the prior art system has the problem of difficulty in optimizing combustion all over the combustion chamber.

### SUMMARY OF THE INVENTION

Accordingly, it is an object of the invention to provide a direct injection diesel engine which avoids the aforementioned disadvantages of the prior art.

It is another object of the invention to provide a direct injection diesel engine with a so-called open combustion chamber type piston, capable of enhancing the air utilization factor by optimizing the fuel injection angle (θ).

In order to accomplish the aforementioned and other objects of the present invention, a direct injection diesel engine comprises a cylinder block having a cylinder, a piston movable through a stroke in the cylinder and having a cavity in a piston crown, a cylinder head on the cylinder block and having a combustion-chamber ceiling wall cooperating with the piston crown and the cavity to define a combustion chamber, and a fuel injector nozzle attached to the combustion-chamber ceiling wall for injecting fuel toward the cavity, characterized in that the fuel injector nozzle is operable at a fuel spray mode during which a fuel spray, injected from the injector nozzle at a fuel injection termination timing under a specified engine operating condition where the fuel injection termination timing is most largely delayed, is distributed uniformly into the inside and outside of the cavity.

According to another aspect of the invention, a direct injection diesel engine comprises a cylinder block having a cylinder, a piston movable through a stroke in the cylinder and having a cavity in a piston crown, a cylinder head on the cylinder block and having a combustion-chamber ceiling wall cooperating with the piston crown and the cavity to define a combustion chamber, and a multi-hole type fuel injector nozzle attached to the combustion-chamber ceiling wall and having a plurality of spray holes equally spaced around the center axis of the injector nozzle, each of the spray holes producing a conical fuel spray under pressure to spray out fuel radially toward the cavity, characterized in that a fuel injection angle of the injector nozzle is set so that a conical fuel spray, injected from each of the spray holes of the injector nozzle at a fuel injection termination timing under a specified engine operating condition where the fuel injection termination timing is most largely delayed, is distributed uniformly into the inside and outside of the cavity, the fuel injection angle being defined as an angle between two slant line segments obtained by cutting a hypothetical circular cone along the plane through the center axis of the injector nozzle, and the hypothetical circular cone consisting of a vertex defined as a point of intersection of the center axes of at least two fuel sprays injected from the spray holes, a conical surface including all of the slant line segments joining the intersection point to points lying on the respective center axes of the fuel sprays and drawn from the intersection point by a given distance along the center axes, and a base defined as a circle including all of the points drawn from the intersection point. It is preferable that the fuel injection angle of the injector nozzle is set so that the center axis of the conical fuel spray, injected from each of the spray holes of the injector nozzle at a fuel injection termination timing under a specified engine operating condition where the fuel injection termination timing is most largely delayed, intersects a portion nearer the edged portion bordered between the cavity and the piston crown.

### BRIEF DESCRIPTION OF THE DRAWINGS

Fig. 1 is a partial cross section of the essential part of a first embodiment of a direct injection diesel engine having open combustion chamber type pistons, and shows a certain fuel-spray state at a fuel-injection termination timing under high engine speed and load where the fuel injection termination timing is most largely delayed.
Fig. 2 is a partial cross section of the essential part of the first embodiment, showing another fuel-spray state at a fuel-injection termination timing under low engine speed and load where the fuel injection termination timing is advanced.
Fig. 3 is a partial cross section of the essential part of the first embodiment, showing another fuel-spray state with the piston at or nearer top dead center (TDC).
Fig. 4 is a partial cross-sectional view of the direct injection diesel engine of the first embodiment, illustrating part of the cylinder head and part of the cylinder block.
Fig. 5 is a partial cross section of the essential part of a second embodiment of a direct injection diesel engine having open combustion chamber type pistons, showing a certain fuel-spray state at a fuel-injection termination timing under high engine speed and load.
Fig. 6 is a partial cross section of the essential part of the second embodiment, showing another fuel-spray state at a fuel-injection termination timing under low engine speed and load.
Fig. 7 is a partial cross section of the essential part of the second embodiment, showing another fuel-spray state with the piston at or nearer top dead center (TDC).
Fig. 8 is a partial cross-sectional view of a conventional direct injection diesel engine having an open combustion chamber type piston and a fuel injector nozzle.

### DESCRIPTION OF THE PREFERRED EMBODIMENTS

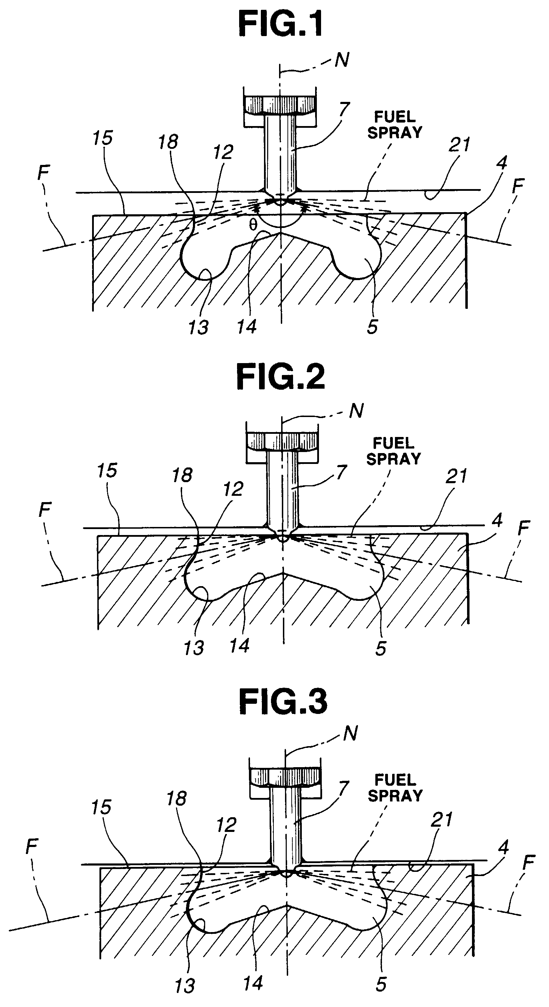

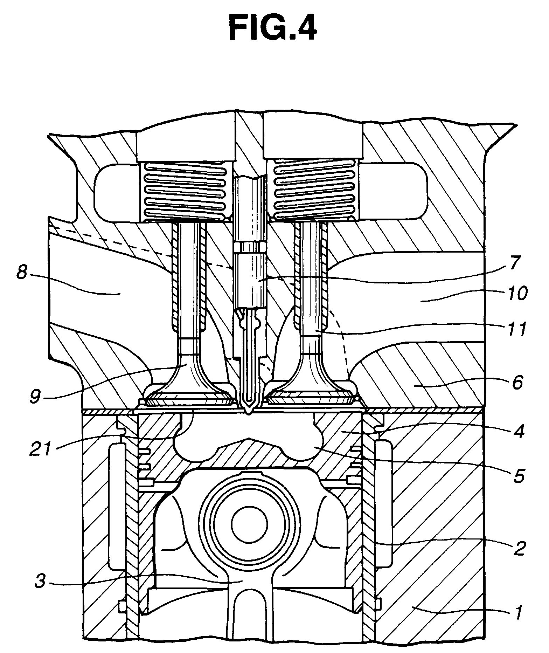

Referring now to the drawings, particularly to Figs. 1 through 4, there is shown the essential part of the direct injection diesel engine of the first embodiment. In Fig. 4, reference sign 1 denotes a cylinder block which is a basic framework of the engine. Reference sign 2 denotes an engine cylinder. In the shown embodiment, the engine cylinder 2 consists of a wet liner type cylinder in which the cylinder liner is directly fitted into the cooling water passages to provide the best cooling effect. Reference sign 6 denotes a cylinder head fitted onto the cylinder block 1 through a gasket in an air-tight fashion. Reference sign 4 denotes a piston with a reentrant cavity 5 that provides a so-called open combustion chamber. The piston 4 is movable through a stroke in the cylinder 2. The cavity 5 is incorporated in the crown 15 of the piston 4. The upper portion of the piston 4 is somewhat similar to a Mexican hat. Intake and exhaust ports 8 and 10 are arranged in the cylinder head 6. An intake valve 9 is located in the cylinder head 6 to open and close the intake port 8, whereas an exhaust valve 11 is carried in the cylinder head 6 to open and close the exhaust port 10. As best seen in Fig. 4, the cylinder head 6 has a combustion-chamber ceiling wall 21 cooperating with the crown portion of the Mexican hat shaped piston 4 and the cavity 5 to define a combustion chamber. A fuel injector nozzle 7 is attached to the ceiling wall 21 to inject or spray out the diesel fuel oil radially into the combustion chamber. As may be appreciated from the cross-section of Fig. 4, the direct injection diesel engine of the embodiment is exemplified in a four-valve DOHC direct-injection, four-stroke-cycle diesel engine. Actually, two intake valves (9, 9) and two exhaust valves (11, 11) are carried in the ceiling wall 21 of the cylinder head 6, in such a manner as to surround the injector nozzle 7. During the intake stroke, as the piston 4 starts its downward movement and the two intake valves 9 open, a vacuum is created in the cylinder 2. Thus, the air is sucked or drawn into the engine cylinder through the intake-valve ports 8 past the respective intake valves (9, 9), because of pressure differential. After the piston 4 reaches bottom dead center (BDC), the piston starts its upward movement. As this happens, the intake valves (9, 9) close, and the exhaust valves (11, 11) are also closed to seal the cylinder 2. As the piston 4 moves upward, the air alone is compressed. At the end of the compression stroke where the piston 4 reaches a predetermined position nearer the top dead center (TDC), the fuel injector opens to inject or spray the diesel fuel oil via the nozzle 7 into the combustion chamber. Heat produced by compressing the air introduced into the cylinder 2 ignites the fuel oil. On the power stroke, the fuel oil burns and creates high pressure, and thus the piston 4 is pushed down. At the end of the power stroke, the exhaust valves (11, 11) open to allow the burned gases to escape or exhaust from the cylinder into the respective exhaust ports 10 during the exhaust stroke. During operation of the engine, these four piston strokes are repeated. The reciprocating motion of the piston 4 is converted into rotary motion of an engine crankshaft (not shown) by means of a connecting rod 3 which connects the piston 4 and a crankpin of a crank on the engine crankshaft.

Hereunder described is the detailed construction of the upper portion of the piston 4 and improved setting of a fuel injection angle θ. As shown in Figs. 1 through 3, the piston 4 for use in the direct injection diesel engine is formed with a reentrant cavity 5 in the crown 15 thereof. That is, the piston 4 is of a so-called "open combustion chamber type". The fuel injector nozzle 7 is located so that the center axis of the nozzle is coaxial with the center axis of the engine cylinder 2. The tip of the nozzle 7 is directed to the centre of the cavity 5 of the open combustion chamber. That is, the fuel injector is centrally located over the piston 4 and the cylinder 2. The piston crown or head 15 is formed on the plane normal to the center axis of the cylinder 2. The piston crown 15 has a rimmed portion circumferentially extending annularly round the cavity 5. A squish area is defined between the rimmed portion of the piston crown 15 and the combustion-chamber ceiling wall 21 of the cylinder head 6, when the piston 4 is at top dead center (TDC). At the end of the compression stroke, the rimmed portion of the piston crown 15 squishes or squeezes the air trapped between the rimmed portion of the piston crown 15 and the ceiling wall 21 of the cylinder head, so as to produce the squish air-flow entering into the cavity 5. The reentrant cavity 5 of the open combustion chamber type piston 4 is comprised of an essentially cylindrical upwardly opening inlet portion 12 formed along the inner periphery of the rimmed portion of the piston crown 15, a reentrant portion 13 further recessed from the cylindrical inlet portion 12, and a central raised portion 14 slightly raised upwardly from the bottom of the reentrant portion 13 of the open combustion chamber. The cylindrical inlet portion 12 constructs the upper portion of the side wall of the cavity 5 opening upwardly at the top of the piston. As can be appreciated from the cross section of Figs. 1 - 3, the cylindrical inlet portion 12 is arranged to be perpendicular to the crown 15 of the piston 4. The rimmed portion of the piston crown 15 and the cylindrical inlet portion 12 cooperates with each other to define a 90°-edged portion 18. The edged portion 18 corresponds to the border between the reentrant cavity 5 and the piston crown 15. The reentrant portion 13 constructs the lower portion of the side wall of the cavity 5 and the outer peripheral portion of the bottom wall surface of the cavity 5. The reentrant portion 13 is formed or curved into a substantially elliptic shape in radial cross section. The reentrant portion 13 is doughnut-shaped and extends annularly coaxially with respect to the center axis of the piston 4. The central raised portion 14 constructs the central portion of the bottom of the cavity 5. The central raised portion 14 is concentric with the piston 4 and formed or raised into a circular cone whose vertical angle is an obtuse angle. Although it is not clearly shown, the injector nozzle 7 comprises a substantially cylindrical hollow nozzle body, and a pintle valve or a needle valve which is axially slidably accommodated in the nozzle body. To provide the fuel injecting operation, the needle valve is lifted or raised away from its valve seat formed in the nozzle body. The lift of the needle valve of the fuel injector is dependent on a pressure level of fuel pressure of the pressurized diesel fuel oil, fed from a fuel pump (not shown) via a fuel passage (not shown) to the fuel injector in synchronization with engine revolution speeds. As long as the needle valve is lifted, fuel sprays out with the nozzle opened. Conversely, when a return spring (not shown) pushes the needle valve back down onto its seat and thus the tip end of the needle valve is seated just on the seat, the nozzle 7 closes. This stops the fuel spray. In the shown embodiment, the fuel injector nozzle 7 is comprised of a typical multi-hole type injector nozzle. The multi-hole type injector nozzle 7 has a plurality of tiny spray holes each of which produces a substantially conical fuel spray under fuel pressure. Usually, the spray holes are formed by boring or drilling in the tip of the nozzle 7. The fuel is injected or sprayed out radially toward the cavity 5 with the needle valve moved away from the needle-valve seat. Each of the spray holes formed in the tip of the nozzle 7 is circular in cross section. The spray holes of the tip of the nozzle 7 are generally spaced apart from each other circumferentially and equi-distantly. The shape or form of fuel spray, which is injected from each of the spray holes and then diffused or distributed throughout the combustion chamber, is substantially conical. The central axial line (simply a center axis) of a certain conical fuel spray is concentric with the center axis of its spray hole. As is generally known, in the diesel engine fuel injection system, as the amount of fuel injected or sprayed out increases owing to increased engine load, the time period of fuel injection becomes longer and thus there is a tendency that the fuel-injection termination timing is delayed. A fuel injection angle is defined as an angle θ between the center axes (F, F) of two fuel sprays diametrically opposed to each other and lying in the plane through the center axis N of the injector nozzle 7, under a condition where the number of the circumferentially equidistant spaced spray holes is an even number. If the number of the circumferentially equidistant spaced spray holes is either an odd number or an even number, the fuel injection angle can be defined as an angle θ between two slant line segments obtained by cutting a hypothetical circular cone along the plane through the center axis N of the injector nozzle 7. The hypothetical circular cone consists of a vertex defined as a point of intersection of the center axes of at least two fuel sprays, a conical surface including all of the slant line segments joining the above-mentioned intersection point to points lying on the respective center axes (F, F, ···, F) of the fuel sprays and drawn from the intersection point by a given distance along the center axes (F, F, ···, F), and a base defined as a circle including all of the previously-noted points drawn from the intersection point. As clearly seen in Figs. 1 through 3, the fuel injection angle θ is set to a value less than 180°. As seen in Fig. 3, the fuel injection angle θ is designed or set, so that the center axis F of the fuel spray injected from each of the spray holes of the injector nozzle 7 intersects the reentrant portion 13 of the reentrant cavity 5 and additionally the fuel spray is not directed into or sprayed out toward the ceiling wall 21, under a particular condition where the piston 4 reaches a position nearer the top dead center (TDC). As seen in Fig. 3, the uppermost line of the conical fuel spray is set to be lower than a line indicating the ceiling wall 21.

With the previously-noted arrangement of the first embodiment, when the needle valve of the injection nozzle 7 is seated on its seat and thus the fuel spray is terminated under a certain engine operating condition, such as high engine speed and load (see Fig. 1), where the fuel injection termination timing is most largely delayed, the fuel injection angle θ of the nozzle 7 is set so that the center axis F of the fuel spray intersects a portion at or nearer the edged portion 18 (precisely the 90°-edged portion bordered between the reentrant cavity 5 and the piston crown 15). In other words, the fuel injector nozzle 7 used in the direct injection diesel engine of the invention is designed to be operable at a fuel spray mode during which the fuel spray, injected from the injector nozzle 7 at a fuel injection termination timing under a specified engine operating condition where the fuel injection termination timing is most largely delayed, is distributed almost uniformly into the inside and outside of the cavity 5. Such a specified setting of the fuel injection angle θ is very advantageous, since the substantially conical fuel spray, injected from each of the tiny spraying holes of the nozzle 7 at the end of injection, can be distributed substantially uniformly into the outside of the reentrant cavity 5 as well as the inside of the cavity. As clearly seen in Fig. 1, owing to the specified setting of the fuel injection angle θ, the fuel spray injected is deliberately impinged on both the cylindrical inlet portion 12 of the reentrant cavity 5 and the rimmed portion of the piston crown 15. That is to say, as appreciated from the cross section of Fig. 1, even when the injection termination timing will be retarded from the top dead center position owing to the increased fuel injection amount, by virtue of the above-mentioned specified setting of the fuel injection angle θ, a portion of the fuel spray reaching the cavity 5 shifts more upwards, than in the conventional direct injection diesel engine as shown in Fig. 8. At the end of fuel injection under high engine speed and load, the fuel spray impinged on both the inlet portion 12 of the cavity 5 and the piston crown 15 (the top surface of the rimmed portion) can be diffused into the outside and inside of the reentrant cavity 5. This permits a comparatively large amount of fuel to be dispersed throughout the combustion chamber, and also allows a more complete utilization of the whole of the air present in the combustion chamber. Thus, the quality of combustion can be improved throughout the combustion chamber. As a result of this, the exhaust smoke density can be reduced and also the engine power output can be effectively enhanced. Hitherto, as seen in Fig. 8, the fuel injection angle θ would be set so that all of fuel sprays from tiny spraying holes of an injection nozzle impinge on the inside wall surface of the reentrant cavity under high engine speed and load, thereby lowering the air utilization factor and thus increasing smoke emissions and simultaneously reducing engine power output.

Referring to Fig. 2, there is shown another fuel-spray impingement state which is achieved when the fuel spray is terminated under a specific engine operating condition, such as low engine speed and load, where the fuel injection termination timing is advanced, according to the direct injection diesel engine of the first embodiment. As seen in Fig. 2, in the case that the fuel injection termination timing is advanced, the center axis F of the conical fuel spray intersects the lower portion of the cylindrical inlet portion 12 of the reentrant cavity 5 and also the uppermost line of the conical fuel spray intersects a portion nearer the edged portion 18. Therefore, under such an engine operating condition where the fuel injection termination timing is advanced, almost all of the fuel sprays injected from the spray holes of the injection nozzle 7 are directed or distributed into the inside of the reentrant cavity 5. At this time, the reentrant portion 13, further recessed from the inlet portion 12 of the cavity 5, serves to concentrate almost all of the fuel sprays, injected from the spray holes of the nozzle 7, in the cavity 5. Additionally, the reentrant portion 13 serves as an increased gas-flow (high turbulence) generating pocket by means of which turbulent flow or swirl is promoted and thus combustion of the fuel concentrated in the cavity 5 is improved to suppress the formation of unburned fuel (HC) and particulates near the cylinder wall.

The fuel injected or sprayed out from the injection nozzle 7 is finely atomized, evaporated, and then mixed with the air present in the combustion chamber. Some movement (turbulent flow or swirl) of the air in the reentrant portion facilitates evaporation and mixing. On the power stroke, the air-fuel mixture is burnt by heat produced by compressing the air in the cylinder.

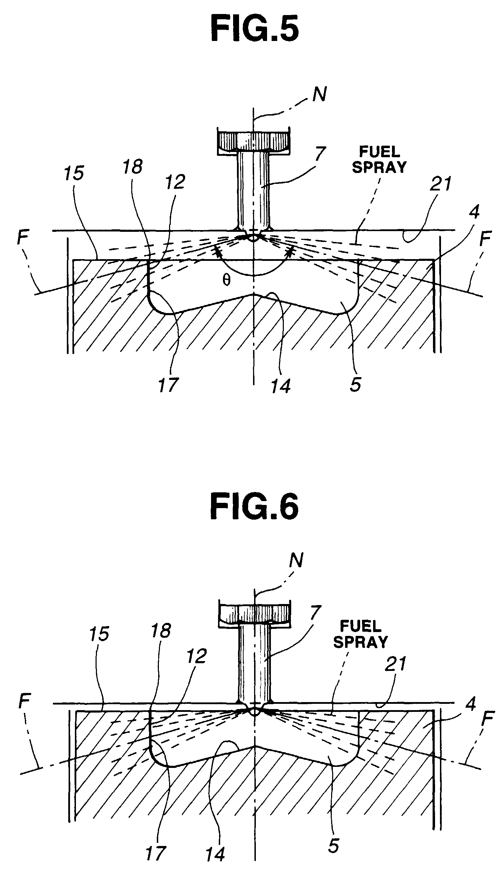

Referring now to Figs. 5 through 7, there is shown the second embodiment of a direct injection diesel engine. The direct injection diesel engine shown in Figs. 5 - 7 is similar to that of the first embodiment shown in Figs. 1 - 4, except that the shape of cross-section of the cavity of the second embodiment is slightly different from that of the reentrant cavity of the first embodiment. Thus, the same reference signs used to designate elements shown in Figs. 1 - 4 will be applied to the corresponding elements used in the second embodiment shown in Figs. 5 - 7, for the purpose of comparison of the first and second embodiments. As seen in Figs. 5 - 7, the cavity 5 of the second embodiment comprises a toroidal bowl type cavity. The toroidal type cavity 5 of the open combustion chamber type piston 4 is comprised of an essentially cylindrical upwardly opening inlet portion 12 formed along the inner periphery of the rimmed portion of the piston crown 15, an intermediate cylindrical side wall portion 17 being continuous with the cylindrical inlet portion 12, and a central raised portion 14 slightly raised from the bottom of the open combustion chamber (the toroidal bowl type cavity). The cylindrical inlet portion 12 constructs the upper portion of the side wall portion 17 of the cavity 5 opening upwardly at the top of the piston. The cylindrical inlet portion 12 and the side wall portion 17, continuous with each other, are concentric with the center axis of the piston 4, and formed into a right circular cylinder. Therefore, the cylindrical inlet portion 12 and the side wall portion 17 are arranged to be perpendicular to the piston crown 15 (see the cross section shown in Figs. 5 - 7). In the direct injection diesel engine of the second embodiment, as can be appreciated from the cross section shown in Figs. 5 - 7, the fuel injection angle θ is set to a value less than 180°. As shown in Fig. 7, the fuel injection angle θ is designed so that the center axis F of the fuel spray injected from each of the spray holes of the injector nozzle 7 intersects the side wall portion 17 of the toroidal-bowl type cavity 5 and additionally the fuel spray is not likely to be directed into or sprayed out toward the ceiling wall 21, when the open combustion chamber type piston 4 reaches a position nearer the top dead center position. With the previously-noted arrangement of the second embodiment, when the fuel spray from each spray hole is terminated with the needle valve of the nozzle 7 seated on its seat for example under high loads (see Fig. 5) where the fuel injection termination timing is most largely retarded, the fuel injection angle θ of the nozzle 7 is set so that the center axis F of the fuel spray intersects a portion at or nearer the edged portion 18. The good setting of the fuel injection angle θ insures improved combustion, because a large amount of substantially conical fuel spray, injected from the respective spraying hole at the end of injection, can be distributed substantially uniformly into the outside as well as the inside of the toroidal-bowl type cavity. As seen in Fig. 5, owing to the specified setting of the fuel injection angle θ, the fuel spray injected is deliberately impinged on both the cylindrical inlet portion 12 and part of the side wall portion 17 of the toroidal-bowl type cavity and the rimmed portion of the piston crown 15. At the end of injection under high engine loads, the fuel spray whose center axis F intersects at or nearer the edged portion 18 can be effectively diffused into the outside and inside of the toroidal-bowl type cavity. This permits a comparatively large amount of fuel to be dispersed throughout the combustion chamber, and thus good combustion can be attained, efficiently utilizing almost all of the air already present in the combustion chamber. As discussed above, the direct injection diesel engine of the invention ensures a more complete utilization of the whole of the air present in the combustion chamber even during high engine loads, and whereby the exhaust smoke density can be reduced and simultaneously the engine power can be enhanced. On the contrary, as seen in Fig. 6, when the fuel spray is terminated for example under light loads where the injection termination timing is advanced, according to the direct injection diesel engine of the second embodiment, the center axis F of the conical fuel spray intersects the lower portion of the cylindrical inlet portion 12 of the toroidal-bowl type cavity and additionally the uppermost line of the conical fuel spray intersects a portion nearer the edged portion 18. Under such a light engine load condition, almost all of the fuel sprays injected from the tiny spray holes are distributed into the inside of the toroidal-bowl type cavity. This effectively suppresses the formation of unburnt fuel (HC) and particulates in the vicinity of the cylinder wall. At this time, the side wall portion 17, being continuous with the cylindrical inlet portion 12, serves to promote turbulent flow in the toroidal-bowl type cavity and to improve combustion, thereby reducing the exhaust smoke density and also enhancing the engine power output.

While the foregoing is a description of the preferred embodiments carried out the invention, it will be understood that the invention is not limited to the particular embodiments shown and described herein, but that various changes and modifications may be made without departing from the scope or spirit of this invention as defined by the following claims.

## Claims

1. A direct injection diesel engine comprising:
a cylinder block (1) having a cylinder (2);
a piston (4) movable through a stroke in the cylinder (2) and having a cavity (5) in a piston crown (15);
a cylinder head (6) on said cylinder block (1) and having a combustion-chamber ceiling wall (21), the ceiling wall (21) cooperating with the piston crown (15) and the cavity (5) to define a combustion chamber; and
a fuel injector nozzle (7) attached to the combustion-chamber ceiling wall (21) for injecting fuel toward the cavity (5),
characterized in that said fuel injector nozzle (7) is operable at a first fuel spray mode during which a fuel spray, injected from said injector nozzle (7) at a fuel injection termination timing under a specified engine operating condition where the fuel injection termination timing is most largely delayed, is distributed uniformly into the inside and outside of the cavity (5).

2. The direct injection diesel engine as set forth in claim 1, characterized in that said fuel injector nozzle (7) is operable at a second fuel spray mode during which a fuel spray, injected from said injector nozzle (7) at a fuel injection termination timing under a specified engine operating condition where the fuel injection termination timing is advanced, is directed into the inside of the cavity (5).

3. A direct injection diesel engine comprising:
a cylinder block (1) having a cylinder (2);
a piston (4) movable through a stroke in the cylinder (2) and having a cavity (5) in a piston crown (15);
a cylinder head (6) on said cylinder block (1) and having a combustion-chamber ceiling wall (21), the ceiling wall (21) cooperating with the piston crown (15) and the cavity (5) to define a combustion chamber; and
a multi-hole type fuel injector nozzle (7) attached to the combustion-chamber ceiling wall (21) and having a plurality of spray holes equally spaced around the center axis (N) of said injector nozzle (7), each of the spray holes producing a conical fuel spray under pressure to spray out fuel radially toward the cavity (5),
characterized in that a fuel injection angle (θ) of said injector nozzle (7) is set so that a conical fuel spray, injected from each of the spray holes of said injector nozzle (7) at a fuel injection termination timing under a specified engine operating condition where the fuel injection termination timing is most largely delayed, is distributed uniformly into the inside and outside of the cavity (5), said fuel injection angle (θ) being defined as an angle between two slant line segments obtained by cutting a hypothetical circular cone along the plane through the center axis (N) of said injector nozzle (7), and the hypothetical circular cone consisting of a vertex defined as a point of intersection of the center axes of at least two fuel sprays injected from the spray holes, a conical surface including all of the slant line segments joining the intersection point to points lying on the respective center axes (F, F, ···, F) of the fuel sprays and drawn from the intersection point by a given distance along the center axes (F, F, ···, F), and a base defined as a circle including all of the points drawn from the intersection point.

4. The direct injection diesel engine as claimed in claim 3, characterized in that the fuel injection angle (θ) of said injector nozzle (7) is set so that the center axis (F) of the conical fuel spray, injected from each of the spray holes of said injector nozzle (7) at a fuel injection termination timing under a specified engine operating condition where the fuel injection termination timing is most largely delayed, intersects a portion nearer an edged portion (18) bordered between the cavity (5) and the piston crown (15).

5. The direct injection diesel engine as set forth in claim 4, characterized in that the fuel injection angle (θ) of said injector nozzle (7) is set so that a conical fuel spray, injected from each of the spray holes of said injector nozzle (7) at a fuel injection termination timing under a specified engine operating condition where the fuel injection termination timing is advanced, is directed into the inside of the cavity (5).

6. The direct injection diesel engine as claimed in claim 5, characterized in that the fuel injection angle (θ) of the injector nozzle (7) is set so that the uppermost line of the conical fuel spray intersects a portion nearer the edged portion (18) at a fuel injection termination timing under a specified engine operating condition where the fuel injection termination timing is advanced and that the uppermost line of the conical fuel spray is set to be lower than the combustion-chamber ceiling wall (21) of the cylinder head (6).

7. The direct injection diesel engine as claimed in claims 1 or 3, characterized in that the cavity (5) comprises a reentrant cavity defined by an essentially cylindrical upwardly-opening inlet portion (12) formed along the inner periphery of a rimmed portion of the piston crown (15), a reentrant portion (13) further recessed from the cylindrical inlet portion (12), and a central raised portion (14) raised upwardly from the bottom of the reentrant portion (13).

8. The direct injection diesel engine as claimed in claims 1 or 3, characterized in that the cavity (5) comprises a toroidal bowl type cavity defined by an essentially cylindrical upwardly-opening inlet portion (12) formed along the inner periphery of a rimmed portion of the piston crown (15), an intermediate cylindrical side wall portion (17) being continuous with the cylindrical inlet portion (12), and a central raised portion (14) raised upwardly from the bottom of the toroidal bowl type cavity.
